(19)

Europäisches
Patentamt

European
Patent Office

Office européen
des brevets

(11) **EP 3 341 253 B1**

(12) **EUROPÄISCHE PATENTSCHRIFT**

(45) Veröffentlichungstag und Bekanntmachung des
Hinweises auf die Patenterteilung:
**07.07.2021   Patentblatt 2021/27**

(21) Anmeldenummer: **16750445.5**

(22) Anmeldetag: **12.08.2016**

(51) Int Cl.:
***B60T 13/38*** *(2006.01)*      ***B60T 17/22*** *(2006.01)*
***B60T 15/24*** *(2006.01)*      ***B60T 13/66*** *(2006.01)*
***B60T 13/68*** *(2006.01)*

(86) Internationale Anmeldenummer:
**PCT/EP2016/069201**

(87) Internationale Veröffentlichungsnummer:
**WO 2017/032617 (02.03.2017 Gazette 2017/09)**

(54) **ELEKTRISCHE PARKBREMSEINRICHTUNG MIT ZUSÄTZLICHER ENERGIEVERSORGUNG**

ELECTRIC PARKING BRAKE WITH AUXILIARY POWER SUPPLY

FREIN DE PARQUAGE ÉLECTRIQUE AVEC SOURCE AUXILIAIRE D'ÉNERGIE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **26.08.2015   DE 102015114176**

(43) Veröffentlichungstag der Anmeldung:
**04.07.2018   Patentblatt 2018/27**

(73) Patentinhaber: **KNORR-BREMSE Systeme für
Nutzfahrzeuge GmbH
80809 München (DE)**

(72) Erfinder:
• **FEUCHT, Thomas
71299 Wimsheim (DE)**
• **HERGES, Michael
80935 München (DE)**

(56) Entgegenhaltungen:
**EP-B2- 1 504 975          DE-A1-102011 016 740
DE-A1-102011 084 534      KR-A- 20130 009 029**

## Beschreibung

Die Erfindung geht aus von einer Parkbremseinrichtung gemäß dem Oberbegriff von Anspruch 1.

Bei einer solchen elektrischen Parkbremseinrichtung besteht das Problem, dass bei Ausfall der elektrischen Spannungsversorgung, z.B. wegen eines zusammengebrochenen Bordnetzes, der Fahrer keine Möglichkeit mehr hat, die Parkbremse einzulegen. Dies führt dazu, dass er, wenn sein Fahrzeug an einem Gefälle stehen geblieben ist, permanent das Bremspedal betätigt halten muss und somit nicht die Kabine verlassen kann, um das Fahrzeug mit Keilen zu sichern. Da in dieser Situation auch der Motor nicht mehr in Betrieb ist und somit keine Druckluft mehr nachgefördert wird, wird nach gewisser Zeit der Druck in der Betriebsbremse nachlassen, die Betriebsbremse folglich lösen und das Fahrzeug bergab rollen.

In der gattungsgemäßen EP 1 504 975 B2 wird zur Lösung dieses Problems für eine elektrische Parkbremseinrichtung ein zusätzliches handbetätigbares 4/3-Wegeventil vorgeschlagen, welches in die elektromagnetische Ventileinrichtung geschaltet ist und durch manuelle Betätigung in eine von drei Schaltstellungen geschaltet werden kann, von denen eine erste Schaltstellung zum Entlüften von zu Federspeicherbremszylindern führenden Anschlüssen, eine zweite Schaltstellung zum Belüften der zu Federspeicherbremszylindern führenden Anschlüsse und eine dritte Schaltstellung zum unbeeinflussten Durchleiten von Druckluft dient. Das handbetätigbare 4/3-Wegeventil soll bei Störungen in der elektrischen Steuerung der elektrischen Parkbremseinrichtung ein manuelles Lösen und Zuspannen der Parkbremse ermöglichen.

Eine solche Lösung weist allerdings den Nachteil auf, dass das handbetätigbare 4/3-Wegeventil zur Bedienung in der Fahrerkabine angebracht werden muss, wozu eine pneumatische Verrohrung zwischen der Fahrerkabine und dem Parkbremsmodul notwendig ist. Außerdem ist das handbetätigbare 4/3-Wegeventil sehr aufwändig in der Herstellung.

Der vorliegenden Erfindung liegt demgegenüber die Aufgabe zugrunde, eine solche Parkbremseinrichtung derart weiter zu entwickeln, dass dem Fahrer auf kostengünstigere Weise die Möglichkeit gegeben wird, auch bei einem Ausfall der elektrischen Energieversorgung bzw. bei einer Störung der elektronischen Steuerung die Parkbremse wenigstens noch zuspannen zu können.

Diese Aufgabe wird erfindungsgemäß durch die Merkmale von Anspruch 1 gelöst.

Offenbarung der Erfindung

Die Erfindung geht davon aus, dass mittels des mit elektrischer Energie versorgten und funktionstüchtigen elektronischen Steuergeräts sämtliche bestimmungsgemäßen Funktionalitäten der Parkbremse wie Fahren (Federspeicherbremszylinder durch Belüften Lösen), Parken (Federspeicherbremszylinder durch Entlüften Zuspannen), Tailertest (Federspeicherbremszylinder des Zugfahrzeugs zugespannt, Anhängerbremsen gelöst), Hilfsbremse (Federspeicherbremszylinder während der Fahrt dosiert zuspannen) durchgeführt werden können.

Die Erfindung geht weiterhin davon aus, dass die elektromagnetische Ventileinrichtung eine Entlüftungsstellung besitzt, in welcher die Federspeicherbremszylinder entlüftet werden. Ebenso ist eine Belüftungsstellung der elektromagnetischen Ventileinrichtung vorhanden, in welcher die Federspeicherbremszylinder zum Lösen belüftet werden. Schließlich weist die elektromagnetische Ventileinrichtung auch eine Neutralstellung auf, in der der Be- oder Entlüftungszustand der Federspeicherbremszylinder aufrecht erhalten werden kann.

Die Erfindung ist dadurch gekennzeichnet, dass durch die zweite, von der ersten elektrischen Energieversorgung unabhängige elektrische Energieversorgung eine vom elektronischen Steuergerät unabhängige elektrische Schalteinrichtung mit elektrischer Energie versorgbar ist, und dass wenigstens ein elektrischer Schalter vorgesehen ist, welcher in einer Schaltstellung die elektrische Schalteinrichtung mit der zweiten elektrischen Energieversorgung verbindet, wobei die elektrische Schalteinrichtung ausgebildet ist, dass sie bedingt durch das Verbinden mit der zweiten elektrischen Energieversorgung die elektromagnetische Ventileinrichtung in die Entlüftungsstellung schaltet.

Daher verbindet der elektrische Schalter in einer Schaltstellung die elektrische Schalteinrichtung mit der zweiten elektrischen Energieversorgung, wobei die elektrische Schalteinrichtung ausgebildet ist, dass sie bei Bestromung die elektromagnetische Ventileinrichtung in die Entlüftungsstellung schaltet, in welcher die Federspeicherbremszylinder entlüftet und damit zugespannt werden. Folglich stellt die elektrische Schalteinrichtung einen Mindestfunktionsumfang an Schaltungs- oder Steuerungslogik zur Verfügung, um durch ihre Bestromung die elektromagnetische Ventileinrichtung in die Entlüftungsstellung zu schalten und zwar unabhängig von dem elektronischen Steuergerät bzw. von dessen Funktionstüchtigkeit. Zwar ist dann eine gegenüber dem elektronischen Steuergerät zusätzliche elektrische Schalteinrichtung notwendig, welche aber im Hinblick auf den geforderten Mindestumfang in Form einer Entlüftungssteuerung der elektromagnetischen Ventileinrichtung sehr einfach ausfallen kann. Auch der elektrische Schalter, welcher ja in digitaler Weise lediglich eine Bestromung/Entstromung der elektrischen Schalteinrichtung bzw. des elektronischen Steuergeräts bewerkstelligen können muss, kann sehr einfach ausfallen. Der Vorteil dieser Alternative liegt neben den oben genannten Vorteilen einer Ersparnis von zusätzlichen Ventilen und pneumatischen Verrohrungen darin, dass mit ihr neben einem Ausfall der ersten elektrischen Energieversorgung auch Funktionsstörungen des elektronischen Steuergeräts der elektrischen Parkbremseinrichtung kompensiert werden können.

Hierdurch ist eine im Hinblick auf Funktionssicherheit günstige Redundanz bezogen auf ein durch eine Betätigung des elektrischen Schalters ausgelöstes Zuspannen der Federspeicherbremszylinder gegeben ist.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform beinhaltet die zweite elektrische Energieversorgung wenigstens Folgendes: Eine Batterie, einen Akku mit Ladeschaltung, einen Doppelschichtkondensator, eine Kombination von Batterie oder Akku und Kondensator. Dabei ist insbesondere vorgesehen, dass ein hoher und kurzzeitiger Einschaltstrom für die elektromagnetische Ventileinrichtung aus der Kombination Kondensator und Batterie oder Akku, aber ein demgegenüber niedrigerer Haltestrom lediglich von der Batterie geliefert wird.

Bevorzugt ist der elektrische Schalter ein elektro-mechanischer Schalter oder ein kontaktloser Schalter. Insbesondere hat der Schalter wenigstens zwei Schaltstellungen, wobei in einer ersten, eine Entlüftungsschaltstellung repräsentierenden Schaltstellung die elektrische Schalteinrichtung mit der zweiten elektrischen Energieversorgung verbunden und in einer zweiten Schaltstellung eine solche Verbindung unterbrochen wird, daher ein typischer "Ein/Aus-Schalter", welcher eine elektrische Verbindung entweder herstellt oder trennt.

Gemäß einer Weiterbildung kann der elektrische Schalter lediglich einen Pluspol der zweiten elektrischen Energieversorgung oder den Pluspol und den Minuspol der zweiten elektrischen Energieversorgung schalten, d.h. verbinden oder trennen.

Besonders bevorzugt ist der elektrische Schalter derart an oder in der elektrischen Betätigungseinrichtung integriert, dass er bei einer Betätigung eines manuell betätigbaren Betätigungsorgans der Betätigungseinrichtung in eine den Zustand "Parken" repräsentierende Stellung die zweite elektrische Energieversorgung mit der elektrischen Schalteinrichtung verbindet (Entlüftungsschaltstellung des elektrischen Schalters). Dann wird der elektrische Schalter mittels einer für den Fahrer gewohnten Betätigung des Betätigungselementes in Richtung der Stellung "Parken" in die Schaltstellung (Entlüftungsschaltstellung) geschaltet, in welcher die zweite elektrische Energieversorgung mit der elektrischen Schalteinrichtung verbunden wird. Diese Vorgehensweise ist insbesondere im Hinblick auf die Bedienungsergonomie günstig zu beurteilen.

Gemäß einer Weiterbildung weist die elektrische Schalteinrichtung wenigstens einen mit der ersten elektrischen Energieversorgung und/oder mit dem elektronischen Steuergerät verbundenen elektrischen Steueranschluss auf und ist derart ausgebildet ist, dass sie

a) bei einem an dem wenigstens einen elektrischen Steueranschluss anstehenden Signal, welches einen vorbestimmten Grenzwert für Strom und/oder Spannung überschreitenden Wert für Strom und/oder Spannung und/oder einen fehlerfreien Betrieb des elektronischen Steuergeräts repräsentiert, die elektromagnetische Ventileinrichtung nicht in die Entlüftungsstellung schaltet, jedoch

b) bei einem an dem wenigstens einen elektrischen Steueranschluss anstehenden Signal, welches einen den vorbestimmten Grenzwert für Strom und/oder Spannung unterschreitenden Wert für Strom und/oder Spannung und/oder einen Fehler oder eine Störung des elektronischen Steuergeräts repräsentiert, die elektromagnetische Ventileinrichtung in die Entlüftungsstellung schaltet.

Im Fall a) ist daher die elektrische Energieversorgung durch die erste elektrische Energieversorgung wenigstens ausreichend und/oder das elektronische Steuergerät ist funktionstüchtig, so dass, obwohl beispielsweise der elektrische Schalter beispielsweise durch eine Betätigung des Betätigungsorgans der elektrischen Betätigungseinrichtung in die Stellung "Parken" in seine Entlüftungsschaltstellung geschaltet wurde, in welcher die elektrische Schalteinrichtung mit der zweiten elektrischen Energieversorgung verbunden wird, die elektromagnetische Ventileinrichtung nicht in die Entlüftungsstellung geschaltet wird. Denn das Schalten der elektromagnetischen Ventileinrichtung in die Entlüftungsstellung wird dann von dem elektronischen Steuergerät selbst bewerkstelligt. Dies trägt zur Energieersparnis bei.

Im Fall b) ist hingegen die elektrische Energieversorgung durch die erste elektrische Energieversorgung nicht ausreichend und/oder das elektronische Steuergerät ist nicht funktionstüchtig, so dass dann die durch den elektrischen Schalter bestromte elektrische Schalteinrichtung die elektromagnetische Ventileinrichtung in die Entlüftungsstellung schaltet.

Die elektrische Schalteinrichtung verhält sich demzufolge als Öffner, d.h. solange das Signal am elektrischen Steueranschluss signalisiert, dass kein Fehler im elektronischen Steuergerät vorliegt bzw. die Energieversorgung durch die erste elektrische Energieversorgung ausreichend ist, dann wird auch die elektromagnetische Ventileinrichtung beispielsweise nicht bestromt und schaltet daher auch nicht in ihre Entlüftungsstellung.

Andernfalls, also wenn das Signal am elektrischen Steueranschluss signalisiert, dass ein Fehler im elektronischen Steuergerät vorliegt bzw. die Energieversorgung durch die erste elektrische Energieversorgung nicht ausreichend ist, dann wird die elektromagnetische Ventileinrichtung beispielsweise bestromt, um in ihre Entlüftungsstellung zu schalten.

Besonders bevorzugt ist daher der elektrische Steueranschluss der elektrischen Schalteinrichtung an die erste elektrische Energieversorgung angeschlossen. Das elektronische Steuergerät enthält bevorzugt Eigenüberwachungsroutinen, welche im Falle einer Funktionsuntüchtigkeit ein Fehlersignal an den elektrischen Steueranschluss der elektrischen Schalteinrichtung aussteuern.

Die elektrische Schalteinrichtung beinhaltet wenigstens Folgendes: Ein Relais, eine elektronische Schaltung, eine Schutzbeschaltung zur Verhinderung einer falschen Bestromung der elektromagnetischen Ventileinrichtung. Wenn beispielsweise ein Relais durch ein Schalten des elektrischen Schalters in die Entlüftungsschaltstellung bestromt wird, so schaltet dieses einen Arbeitsstrom auf die elektromagnetische Ventileinrichtung, die dann daraufhin ihre Entlüftungsstellung einnimmt. Mithin ist als elektrische Schalteinrichtung jegliche Einrichtung denkbar, welche durch eine durch Umschalten des elektrischen Schalters bedingte Signaländerung (z.B. Bestromen bzw. Entstromen) die elektromagnetische Ventileinrichtung in die Entlüftungsstellung schalten kann.

Die elektrische Schalteinrichtung ist bevorzugt ausgebildet, dass sie infolge einer Bestromung durch ein Schalten des elektrischen Schalters in die Entlüftungsschaltstellung die elektromagnetische Ventileinrichtung bestromt, welche daraufhin in die Entlüftungsstellung schaltet. Dabei ist die elektromagnetische Ventileinrichtung bevorzugt ausgebildet, dass sie durch Bestromen in ihre Entlüftungsstellung schaltet.

Die elektromagnetische Ventileinrichtung beinhaltet bevorzugt eine Einlass-/Auslassventilkombination mit einem beispielsweise in seine Sperrstellung federbelasteten 2/2-Wege-Magnetventil als Auslassventil, welches bestromt von seiner Sperrstellung in seine Durchlassstellung schaltet, in welcher die Federspeicherbremszylinder mit einer Drucksenke verbunden werden.

Die elektrische Parkbremseinrichtung beinhaltet bevorzugt ein Parkbremsmodul als Baueinheit, bei welchem in einem Gehäuse wenigstens Folgendes integriert ist: Die elektronische Steuereinrichtung, die elektromagnetische Ventileinrichtung, ein Anschluss für die erste elektrische Energieversorgung, ein Feststellbremssignalanschluss für die elektrische Betätigungseinrichtung, wenigstens ein Anschluss für wenigstens einen Federspeicherbremszylinder.

In diesem Gehäuse können auch die zweite elektrische Energieversorgung und/oder die elektrische Schalteinrichtung angeordnet sein. Alternativ ist die zweite elektrische Energieversorgung bzw. die elektrische Schalteinrichtung separat von dem Parkbremsmodul angeordnet, so dass dann das Gehäuse dann entsprechende Anschlüsse aufweist.

Bevorzugt überwacht das elektronische Steuergerät die zweite elektrische Energieversorgung auf deren Ladezustand, wobei bei einem Unterschreiten eines vorgegebenen Grenzwerts für den Ladezustand ein Warnsignal erzeugt wird. Damit wird der Fahrer auf einen kritischen Ladezustand der zweiten elektrischen Energieversorgung aufmerksam gemacht.

Die Erfindung betrifft auch ein Fahrzeug, insbesondere ein zum Ankoppeln eines Anhängers ausgebildetes Zugfahrzeug, wobei der wenigstens eine elektrische Schalter in einer Fahrerkabine des Fahrzeugs angeordnet ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Genaueres geht aus der folgenden Beschreibung von Ausführungsbeispielen hervor.

Zeichnung

Nachstehend sind Ausführungsbeispiele der Erfindung in der Zeichnung dargestellt und in der nachfolgenden Beschreibung näher erläutert. In der Zeichnung zeigt

Fig.1     einen Auszug aus einem schematischen Schaltplan einer Ausführungsform einer elektrischen Parkbremseinrichtung;

Fig.2     einen Auszug aus einem schematischen Schaltplan einer weiteren Ausführungsform einer elektrischen Parkbremseinrichtung;

Fig.3     einen Auszug aus einem schematischen Schaltplan einer Ausführungsform einer elektrischen Parkbremseinrichtung gemäß der Erfindung;

Fig.4     einen Auszug aus einem schematischen Schaltplan einer weiteren Ausführungsform einer elektrischen Parkbremseinrichtung gemäß der Erfindung;

Fig.5    einen Auszug aus einem schematischen Schaltplan einer weiteren Ausführungsform einer elektrischen Parkbremseinrichtung gemäß der Erfindung.

Beschreibung der Ausführungsbeispiele

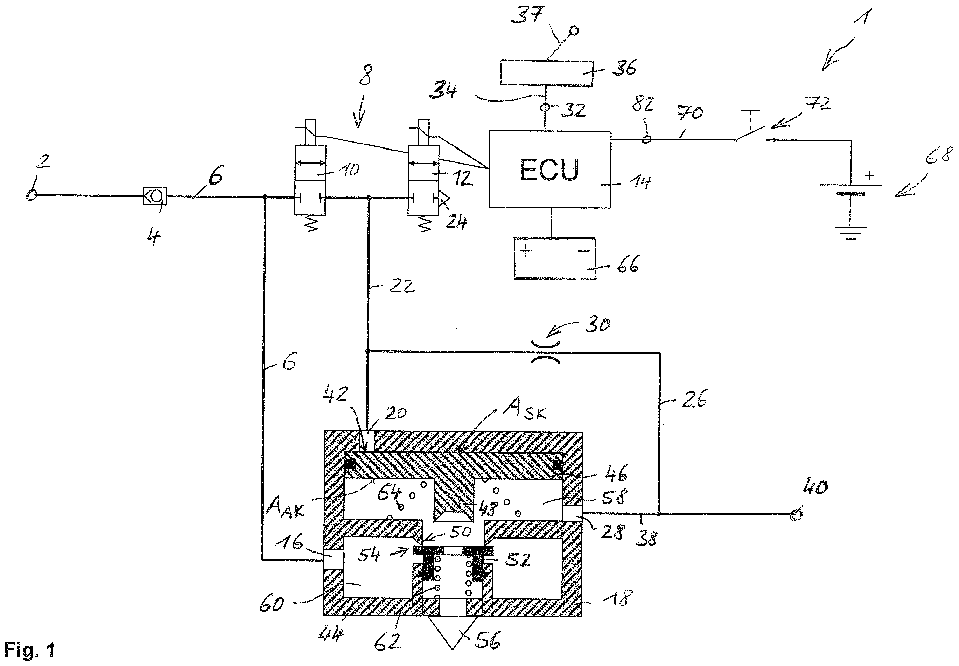

In **Fig.1** ist ein Auszug aus einem schematischen Schaltplan einer Ausführungsform einer elektrischen Parkbremseinrichtung 1 einer Zugfahrzeug-Anhängerkombination gezeigt. Die elektrische Parkbremseinrichtung 1 stellt neben einer elektropneumatischen Betriebsbremseinrichtung der Zugfahrzeug-Anhängerkombination, insbesondere einer
elektronisch geregelten Bremsanlage (EBS) einen Teil der Bremsanlage der Zugfahrzeug-Anhängerkombination dar
und ist auf dem Zugfahrzeug angeordnet.

Die Parkbremseinrichtung 1 hat einen Vorratsanschluss 2, der über ein Rückschlagventil 4 abgesichert ist.
Von dem Vorratsanschluss 2 erstreckt sich eine Vorratsleitung 6 einerseits zu einer elektropneumatischen Ventileinrichtung 8 mit einem ersten 2/2-Wegemagnetventil 10 als Einlassventil und einem zweiten 2/2-Wegemagnetventil 12
als Auslassventil. Das erste 2/2-Wegemagnetventil 10 befindet sich wie das zweite 2/2-Wegemagnetventil 12 unbestromt
in der gezeigten Sperrstellung, während beide Ventile 10, 12 bestromt in die Durchlassstellung umschalten und von
einem elektronischen Steuergerät 14 gesteuert werden.

Weiterhin ist auch ein Vorratseingang 16 eines Relaisventils über die Vorratsleitung 6 an den Vorratsanschluss
2 angeschlossen. Ein pneumatischer Steuereingang 20 des Relaisventils 18 ist über eine Steuerleitung 22 mit der
Kombination aus Einlassventil 10 (erstes 2/2-Wegemagnetventil) und Auslassventil 12 (zweites 2/2-Wegemagnetventil)
verbunden.

Im Einzelnen ist in der stromlosen Sperrstellung des zweiten 2/2-Wegemagnetventils 12 die Verbindung zwischen der Steuerleitung 22 bzw. dem Steuereingang 20 des Relaisventils 18 und einer Drucksenke 24 unterbrochen,
während diese Verbindung in der bestromten Durchlassstellung geschaltet ist. In analoger Weise ist in der stromlosen
Sperrstellung des ersten 2/2-Wegemagnetventils 10 die Verbindung zwischen der Steuerleitung 22 bzw. dem Steuereingang 20 des Relaisventils 18 und dem Vorratsanschluss 2 unterbrochen, während diese Verbindung in der bestromten
Durchlassstellung geschaltet ist.

Darüber hinaus ist in eine Rückkopplungsleitung 26 zwischen einem Arbeitsausgang 28 des Relaisventils 18
und dem Steuereingang 20 des Relaisventils 18 ein Drosselelement 30 geschaltet, durch welches der Strömungsquerschnitt der Rückkopplungsleitung 26 verengt und mittels der Strömungsquerschnittsverengung der Luftmassenstrom
zwischen dem Arbeitsausgang und dem pneumatischen Steuereingang des Relaisventils begrenzt bzw. gedrosselt wird.

Die beiden 2/2-Wegemagnetventile 10, 12 sind bevorzugt in ihre stromlose Stellung federbelastet vorgespannt
und werden durch Bestromung mittels der Steuereinrichtung 14 umgeschaltet.

Der Arbeitsausgang 28 des Relaisventils 18 ist mittels einer Arbeitsleitung 38 mit einem Anschluss 40 für
wenigstens einen Federspeicherbremszylinder verbunden. An diesen Anschluss 40 sind bevorzugt zwei hier nicht gezeigte Federspeicherbremszylinder an der Hinterachse angeschlossen.

Die Steuerleitung 22 bzw. der Steuereingang 20 des Relaisventils 18 wird je nach Schaltstellung des ersten
2/2-Wegemagnetventils 10 und des zweiten 2/2-Wegemagnetventil 12 (Einlass-/Auslassmagnetventilkombination) be-
oder entlüftet, so dass eine Be- oder Entlüftung durch Luftmengenverstärkung mittels des Relaisventils 18 eine entsprechende Be- oder Entlüftung des Arbeitsausgangs 28 und damit des Anschlusses 40 für den wenigstens einen Federspeicherbremszylinder nach sich zieht.

Das Relaisventil 18 ist in weitgehend bekannter Weise aufgebaut und beinhaltet eine über den Steuereingang
20 an die Steuerleitung angeschlossene Steuerkammer 42, einen die Steuerkammer 42 begrenzenden, in einem Gehäuse 44 beweglichen Relaiskolben 46 mit einem an dem Relaiskolben 46 bzw. an dessen Relaisventilkolbenstange
ausgebildeten Ventilkörper 48, der mit einem Auslasssitz 50 an einer ebenfalls im Gehäuse 44 beweglich aufgenommenen Manschette 52 ein Auslassventil eines Doppelsitzventils ausbildet. Weiterhin beinhaltet das Relaisventil 18 einen
am Gehäuse 44 ausgebildeten Einlasssitz 54, gegen welchen die Manschette 52 vorgespannt und mit diesem zusammen
ein Einlassventil des Doppelsitzventils bildet. Die Manschette 52 weist außerdem eine mittige Durchgangsbohrung auf,
die bei von der Manschette 52 abgehobenem Relaiskolben 46 eine Entlüftung 56 mit einer Arbeitskammer 58 verbindet,
die mit dem Arbeitsausgang 28 verbunden ist, um diesen zu entlüften. Andererseits ist eine mit dem Vorratseingang 16
in Verbindung stehende Vorratskammer 60 bei von dem Einlasssitz 54 abgehobener Manschette 52 mit der Arbeitskammer 58 verbunden, um den Arbeitsausgang 28 zu belüften. Die Stellung des Relaiskolbens 46, der mit seinem
Ventilkörper 48 die Manschette 52 nach unten drücken kann, um ihn vom Einlasssitz 54 abzuheben wird demnach durch
den Druck am Steuereingang 20 bzw. in der Steuerkammer 42 bestimmt. Schließlich wird die Manschette 52 mittels
einer Manschettenfeder 62 gegen den Einlasssitz 54 gedrängt. Außerdem drängt eine Relaiskolbenfeder 64 mit der
Kraft $F_F$ den Relaiskolben 46 vom Auslasssitz 50 weg in Richtung Steuerkammer 42.

Die Schaltzustände der beiden 2/2-Wegemagnetventile 10, 12 werden durch das Steuergerät 14 bestimmt,
insbesondere in Abhängigkeit von den an dem Feststellbremssignalanschluss 32 anstehenden Feststellbremssignalen.
Hierzu ist der Feststellbremssignalgeber 36 ausgebildet, dass er abhängig von einer Betätigung eines Feststellbremsbetätigungsorgans 37 Feststellbremssignale aussteuert, welche die weiter unter beschriebenen Betriebszustände repräsentieren.

Das Steuergerät 14 kann über den Feststellbremssignalanschluss 32 oder über einen weiteren Signalanschluss auch mit einem in den Figuren nicht dargestellten Fahrzeugdatenbus verbunden sein, über den digitale Daten von anderen Steuereinrichtungen empfangen und an diese gesendet werden können. Anstatt durch den oder zusätzlich zu dem durch den Fahrer manuell bedienbaren Feststellbremssignalgeber 36 können Feststellbremssignale auch von einer weiteren Steuereinrichtung beispielsweise über einen Fahrzeugdatenbus in das Steuergerät 14 eingesteuert werden, beispielsweise von einem Fahrerassistenzsystem wie beispielsweise von einem Anfahrhilfesystem an Steigungen. Anhand von über einen solchen Fahrzeugdatenbus empfangenen Signalen können Feststellbremssignale dann von dem Steuergerät 14 selbst generiert werden. Beispielsweise kann die Parkbremse automatisch zugespannt werden, wenn das Fahrzeug zum Stillstand gekommen ist, oder auch automatisch gelöst werden, wenn erkannt wird, dass das Fahrzeug losfahren soll.

Im Einzelnen beaufschlagt der Druck $p_{SK}$ in der Steuerkammer 42 die dieser zugewandte Fläche $A_{SK}$ des Relaiskolbens 46, der Arbeitskammerdruck $p_{AK}$ wirkt auf die dieser zugewandten. Fläche $A_{AK}$. Die der Steuerkammer 42 zugewandte Fläche $A_{SK}$ des Relaiskolbens 46 ist größer als die der Arbeitskammer 58 zugewandte Fläche $A_{AK}$.

Auf den Relaiskolben 46 wirken also folgende Kräfte:

Aus Richtung Steuerkammer: $\quad F_{st} = p_{SK}A_{SK}$

Aus Richtung Arbeitskammer: $\quad F_{AK} = F_F + p_{AK}A_{AK}$

Wird die Manschette 52 nach unten bewegt, so muss zusätzlich die Kraft $F_{F2}$ der Manschettenfeder 62 überwunden werden. Schließlich müssen noch die Reibkräfte $F_{Reibung}$ der Dichtungen und Führungen von Relaiskolben 46 und Manschette 52 überwunden werden, wenn der Relaiskolben 46 bewegt werden soll.

Vor diesem Hintergrund ist die Funktionsweise der elektromagnetischen Parkbremssteuereinrichtung 1 wie folgt:

In dem in Fig.1 gezeigten Grundzustand der elektrischen Parkbremseinrichtung 1 sind sowohl das erste 2/2-Wegemagnetventil 10 als auch das zweite 2/2-Wegemagnetventil 12 unbestromt, so dass über das Drosselelement 30 der Steuereingang 20 stets mit dem Arbeitsausgang 28 des Relaisventils 18 verbunden ist. Damit ist die Rückkopplung stabil und es kann keine Druckluft vom Vorratsanschluss 2 zum Steuereingang 20 des Relaisventils 18 gelangen bzw. von diesem zur Drucksenke 24 entweichen. Damit wird auch der gerade herrschende Druck an dem Anschluss 40 für den wenigstens einen Federspeicherbremszylinder und dadurch auch dessen Zuspann- bzw. Lösestellung konstant gehalten.

Soll nun auf ein entsprechendes Feststellbremssignal hin der Druck an dem Anschluss 40 für den wenigstens einen Federspeicherbremszylinder erhöht werden, beispielsweise im Betriebszustand "Hilfsbremse", so wird durch Bestromung des ersten 2/2-Wegemagnetventils 10 dieses in Durchgangsstellung geschaltet und dadurch der Druck in der Steuerkammer 42 des Relaisventils 18 erhöht. Dies erfolgt insbesondere durch Pulsen des ersten 2/2-Wegemagnetventils 10.

Wenn dann gilt:

$$p_{SK}A_{SK} > F_F + F_{F2} + p_{AK}A_{AK} + F_{Reibung},$$

so bewegt sich der Relaiskolben 46 nach unten, öffnet den Einlasssitz 54 des Doppelsitzventils und lässt Vorratsdruck in die Arbeitskammer 58 einströmen. Wenn dann gilt:

$$p_{SK}A_{SK} + F_{Reibung} = F_F + p_{AK}A_{AK}$$

bewegt sich der Relaiskolben 46 zurück bis in eine Neutralstellung, in welcher Einlasssitz 54 und Auslasssitz 50 des Doppelsitzventils geschlossen sind.

Soll demgegenüber auf ein entsprechendes Feststellbremssignal hin ein geringerer Druck an dem Anschluss 40 für den wenigstens einen Federspeicherbremszylinder eingeregelt werden, beispielsweise im Betriebszustand "Hilfsbremse", so wird vorzugsweise durch Pulsen des zweiten 2/2-Wegemagnetventils 12 der Steuerdruck in der Steuerkammer 42 abgesenkt, bis gilt:

$$p_{SK}A_{SK} + F_{Reibung} < F_F + p_{AK}A_{AK}.$$

Dann bewegt sich der Relaiskolben 46 in Richtung Steuerkammer 42 und entlüftet die Arbeitskammer 58 über den Auslasssitz 50 des Doppelsitzventils, bis wieder Kräftegleichgewicht herrscht, worauf der Relaiskolben 46 wieder in Neutralstellung übergeht.

Da während der oben beschriebenen Drucksteuerung bzw. Druckregelung in der Steuerkammer 42 und in der Arbeitskammer 58 im Allgemeinen nicht die gleichen Drücke herrschen und über das Drosselelement 30 immer ein gewisse Luftmenge in Richtung des niedrigeren Drucks strömt, wird vorzugsweise daraus resultierende Anteil der Druckänderung in der Steuerkammer 42 durch entsprechende gepulste Steuerung des ersten 2/2-Wegemagnetventils 10 bzw. des zweiten 2/2-Wegemagnetventils 12 ausgeglichen. Dies gilt sowohl für Drucksteigern, Druckverringern als auch für Druckhalten, wenn nicht genau Vorratsdruck oder Atmosphärendruck am Anschluss 40 für den wenigstens einen Federspeicherbremszylinder herrschen sollen.

Zum Herstellen des Betriebszustands "Fahren" auf ein entsprechendes Feststellbremssignal hin wird das erste 2/2-Wegemagnetventil 10 über längere Zeit bestromt. Dadurch wird die Steuerkammer 42 belüftet, auch wenn zunächst ein geringer Teil der vom ersten 2/2-Wegemagnetventil 10 zur Steuerkammer geleiteten Luft durch das Drosselelement 30 in die Arbeitskammer abströmt.

Wenn gilt:

$$p_{SK} A_{SK} > F_F + F_{F2} + F_{Reibung}$$

steigt auch der Druck in der Arbeitskammer 58, solange gilt:

$$p_{SK} A_{SK} > F_F + F_{F2} + p_{AK} A_{AK}$$

Da die Fläche $A_{SK}$ größer als die Fläche $A_{AK}$ ist, steigt in der Arbeitskammer 58 der Druck schneller als in der Steuerkammer 42 bis er ihn schließlich überschreitet. Dann strömt über die Rückkopplungsleitung 26 und das Drosselelement 30 Luft von der Arbeitskammer 58 in die Steuerkammer 42 über, so dass sich der Prozess selbst verstärkt.

Dadurch wird der Relaiskolben 46 stabil in seine untere, zur Arbeitskammer 58 weisende Endposition gedrängt, sodass er permanent den Einlasssitz 54 des Doppelsitzventils öffnet und die Arbeitskammer 58 mit dem Vorratsanschluss 2 verbindet.

Da nun die Steuerkammer 42 über das Drosselelement 30, die Arbeitskammer 58 und den Einlasssitz 54 permanent mit Vorratsdruck versorgt wird, kann auch das erste 2/2-Wegemagnetventil 10 entstromt werden, um es in seine Sperrstellung zu schalten. Es gilt dann:

$$p_{SK} = p_{AK} = p_{Verorgung}$$

Im stabilen Betriebszustand "Fahren" bleibt der Relaiskolben 46 in der Belüftungsstellung und es gilt:

$$p_{Versorgung} A_{SK} + F_{Reibung} > F_F + F_{F2} + p_{Versorgung} A_{AK}$$

Sinkt in der Stellung "Fahren" der Vorratsdruck $p_{Versorgung}$ unter einen bestimmten Schwellwert ab, z.B. weil bei ausgeschaltetem Motor geringe (Undichtigkeiten hinter Anschluss 40 nicht mehr nachgefördert werden, so überwiegt irgendwann die von der Relaiskolbenfeder 64 auf den Relaiskolben 46 wirkende Kraft und der Einlasssitz 54, wird geschlossen, der Auslasssitz 50 geöffnet und der Druck in der Arbeitskammer 58 entlüftet. Da das Drosselelement 30 die Steuerkammer 42 mit der Arbeitskammer 58 verbindet wird nun auch die Steuerkammer 42 entlüftet, wodurch die Federkräfte der Relaiskolbenfeder 64 nun noch mehr überwiegen. Die Parkbremse geht dann automatisch in die stabile Parkstellung.

Zum Herstellen des Betriebszustands "Parken" wird das zweite 2/2-Wegemagnetventil 12 über eine gewisse Zeitdauer bestromt. Dadurch wird die Steuerkammer 42 entlüftet, bis dort Atmosphärendruck herrscht.

Wenn gilt:

$$p_{SK} A_{SK} + F_{Reibung} < F_F + p_{AK} A_{AK}$$

bewegt sich der Relaiskolben 46 in Richtung Steuerkammer 42 und entlüftet die Arbeitskammer 58 über den Auslasssitz 50 des Doppelsitzventils.

Da die Fläche $A_{SK}$ deutlich größer ist als die Fläche $A_{AK}$, ist der Druck in der Arbeitskammer 58 zunächst noch höher als der in der Steuerkammer 42, weshalb Luft zunächst noch von der Arbeitskammer 58 über das Drosselelement 30 in Richtung Steuerkammer 42 strömt. Da jedoch der Öffnungsströmungsquerschnitt des zweiten 2/2-Wegemagnetventils 12 größer ist als der Strömungsquerschnitt des Drosselelements 30 an der Drosselstelle sinkt der Druck in der Steuerkammer 42 dennoch.

Da wegen der Flächenverhältnisse der Druck $p_{AK}$ in der Arbeitskammer schneller sinkt als der Druck $p_{SK}$ in der Steuerkammer wird Ersterer wegen der Relaiskolbenfeder 64 irgendwann kleiner als Letzterer. Nun dreht sich die Strömungsrichtung durch das Drosselelement 30 um und es strömt Luft von der Steuerkammer 42 zur Arbeitskammer 58, so dass sich der Prozess selbst verstärkt, bis überall Atmosphärendruck herrscht.

Die den Relaiskolben 46 belastende Relaiskolbenfeder 64 sorgt dafür, dass er sich bis in seine obere Endstellung bewegt und dort verharrt, wodurch der Auslasssitz 50 permanent vollständig geöffnet ist. Da nun die Steuerkammer 42 über das Drosselelement 30, die Arbeitskammer 58 und den geöffneten Auslasssitz 50 permanent mit Atmosphäre verbunden ist, kann das zweite 2/2-Wegemagnetventil 12 entstromt und damit in seine Sperrstellung gebracht werden. Dann ist der stabile Betriebszustand "Parken" erreicht.

Das elektronische Steuergerät 14 wird von einer ersten elektrischen Energieversorgung 66, insbesondere von einer an ein Bordnetz des Zugfahrzeugs angeschlossenen Bordbatterie beispielsweise mit 24V Gleichstrom versorgt. Aufgrund dieser ersten elektrischen Energieversorgung ist das Steuergerät 14 in der Lage, die elektromagnetische Ventileinrichtung 8 zu steuern bzw. deren Ventile 10, 12 zu bestromen bzw. zu entstromen.

Darüber hinaus ist eine zweite, von der ersten elektrischen Energieversorgung 66 hängige elektrische Energieversorgung 68 vorgesehen, durch welche das elektronische Steuergerät 14 mit elektrischer Energie versorgbar ist. Weiterhin ist in einer elektrischen Leitung 70 zwischen dem elektronischen Steuergerät 14 und der zweiten elektrischen Energieversorgung 68 ein elektrischer Schalter 72 vorgesehen.

Die zweite elektrische Energieversorgung 68 kann wenigstens Folgendes beinhalten: Eine Batterie, einen Akku mit Ladeschaltung, einen Doppelschichtkondensator, eine Kombination von Batterie oder Akku und Kondensator. Dabei ist insbesondere vorgesehen, dass ein hoher und kurzzeitiger Einschaltstrom für die elektromagnetische Ventileinrichtung aus der Kombination Kondensator und Batterie oder Akku, aber ein demgegenüber niedrigerer Haltestrom lediglich von der Batterie geliefert wird. Im hier beschriebenen Ausführungsbeispiel wird die zweite elektrische Energieversorgung 68 durch eine zusätzliche Bordbatterie gebildet.

Bevorzugt ist hier der elektrische Schalter 72 ein elektro-mechanischer Schalter mit wenigstens zwei Schaltstellungen, wobei in einer ersten, eine Entlüftungsschaltstellung repräsentierenden Schaltstellung das elektronische Steuergerät 14 mit der zweiten elektrischen Energieversorgung 68 verbunden und in einer zweiten Schaltstellung eine solche Verbindung unterbrochen wird.

Beim Schalten des Schalters 72 in die Entlüftungsschaltstellung wird das elektronische Steuergerät 14 daher von der zweiten elektrischen Energieversorgung 68 mit elektrischer Energie versorgt, so dass das elektronische Steuergerät 14 und damit die elektronische Steuerung der Parkbremseinrichtung 1 auch bei einem Ausfall der ersten elektrischen Energieversorgung 66 und die elektrische Parkbremseinrichtung 1 in allen ihren Funktionen (z.B. Parken, Fahren, Trailer-Test, Hilfsbremsen) und insbesondere im Hinblick auf das Zuspannen der Parkbremse (Parken) durch Entlüften der Federspeicherbremszylinder voll funktionsfähig bleiben, sofern das elektronische Steuergerät 14 funktionstüchtig arbeitet.

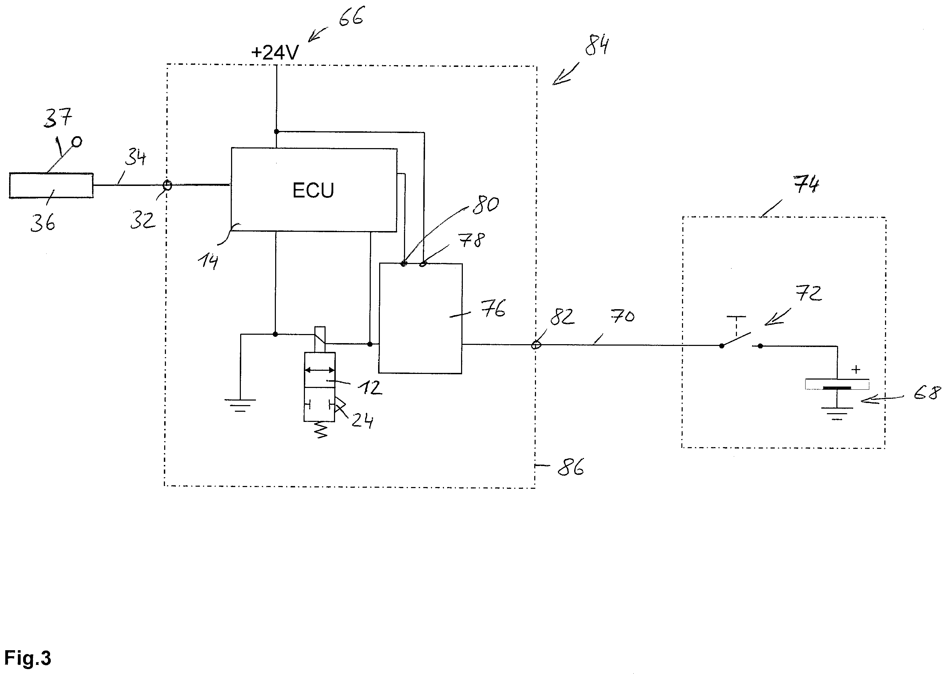

In **Fig.1** ist der elektrische Schalter 72 lediglich aus zeichnerischen Gründen vom Feststellbremssignalgeber 36 getrennt angeordnet. Besonders bevorzugt ist aber der elektrische Schalter 72 derart an oder in dem Feststellbremssignalgeber 36 integriert, dass er bei einer Betätigung des Feststellbremsbetätigungsorgans 37 in eine den Zustand "Parken" repräsentierende Stellung die zweite elektrische Energieversorgung 68 mit dem elektronischen Steuergerät 14 verbindet (Entlüftungsschaltstellung des elektrischen Schalters 72). Dann wird der elektrische Schalter 72 mittels einer für den Fahrer gewohnten Betätigung des Feststellbremsbetätigungsorgans 37 in Richtung der Stellung "Parken" in die erste Schaltstellung (Entlüftungsschaltstellung) geschaltet, in welcher die zweite elektrische Energieversorgung 68 mit dem elektronischen Steuergerät 14 verbunden wird. Bei der Ausführungsform von **Fig.1** ist der Feststellbremssignalgeber 36 mit dem in oder an ihm integriertem elektrischen Schalter 72 bevorzugt in einer Fahrerkabine 74 des Fahrzeugs angeordnet, wie auch anhand der Ausführungsformen von **Figuren 3 bis 5** gemäß der Erfindung beispielhaft gezeigt ist. Alternativ könnte der elektrische Schalter 72 in der Fahrerkabine 74 auch getrennt vom Feststellbremssignalgeber 36 angeordnet sein.

Gemäß der in **Fig.1** gezeigten Ausführungsform schaltet der elektrische Schalter lediglich einen Pluspol der zweiten elektrischen Energieversorgung 68.

Bei den nachfolgend beschriebenen Ausführungsformen sind gleiche oder gleich wirkende Bauteile und Komponenten mit Bezug auf die voranstehend beschriebene Ausführungsform mit den gleichen Bezugszahlen gekennzeichnet.

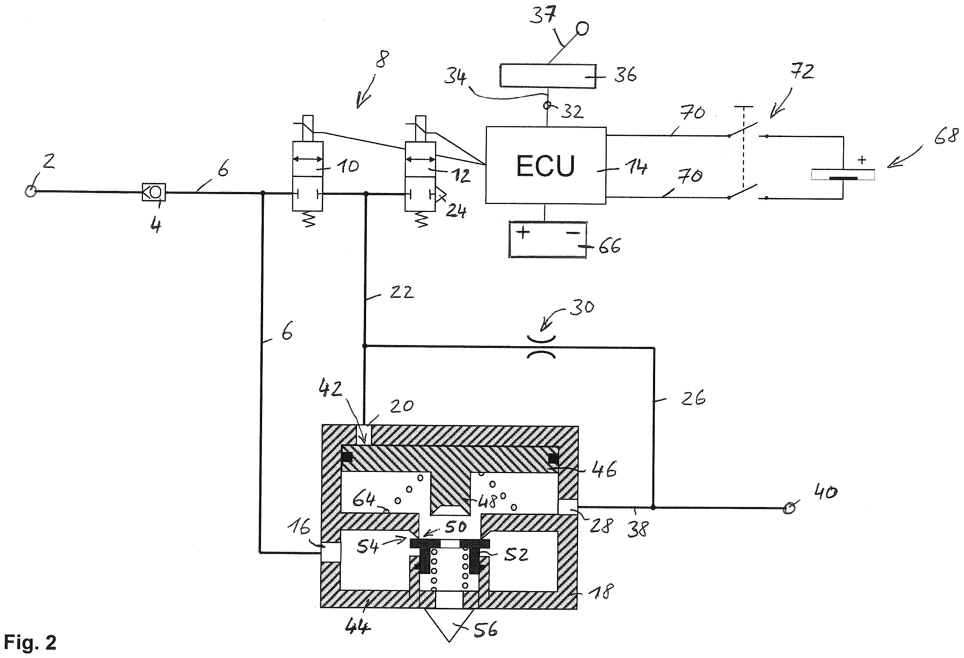

Im Unterschied zu der Ausführungsform von **Fig.1** schaltet der elektrische Schalter 72 bei der Ausführungsform von **Fig.2** den Pluspol und den Minuspol der zweiten elektrischen Energieversorgung 68. Die elektrische Leitung 70 hat dann zwei Adern.

Bei den erfindungsgemäßen Ausführungsformen gemäß **Figuren 3 bis 5** verbindet der elektrische Schalter 72 in seiner ersten Schaltstellung (Entlüftungsschaltstellung), welche zu einer Entlüftung der Federspeicherbremszylinder führt, eine elektrische Schalteinrichtung 76 mit der zweiten elektrischen Energieversorgung 68. Aus zeichnerischen Gründen ist in den Figuren 3 bis 5 von der elektromagnetischen Ventileinrichtung 8 lediglich das zweite 2/2-Wege-Magnetventil (Auslassventil) gezeigt. Weiterhin sind dort auch das Relaisventil 18 sowie auch sämtliche Anschlüsse 2, 32, 40 vorhanden.

Die elektrische Schalteinrichtung 76 ist ausgebildet, dass sie bei Bestromung die elektromagnetische Ventileinrichtung 8 und dort insbesondere das zweite 2/2-Wege-Magnetventil 12 (Auslassventil) bestromt, welches dann in die Entlüftungsstellung schaltet, in welcher die Federspeicherbremszylinder entlüftet und damit zugespannt werden.

Bei dieser Alternative stellt daher die elektrische Schalteinrichtung 76 einen Mindestfunktionsumfang an Schaltungs- oder Steuerungslogik zur Verfügung, um durch ihre Bestromung die elektromagnetische Ventileinrichtung 8 in die Entlüftungsstellung zu schalten und zwar unabhängig von dem elektronischen Steuergerät 14 bzw. von dessen Funktionstüchtigkeit.

Die elektrische Schalteinrichtung 76 weist beispielsweise einen mit der ersten elektrischen Energieversorgung 66 verbundenen ersten elektrischen Steueranschluss 78 und einen mit dem elektronischen Steuergerät 14 verbundenen zweiten elektrischen Steueranschluss 80 auf.

Dabei ist die elektrische Schalteinrichtung 76 ausgebildet, dass sie bei einem an dem ersten elektrischen Steueranschluss 78 anstehenden Wert der Spannung der ersten elektrischen Energieversorgung 66, welcher einen vorbestimmten Grenzwert für die Spannung überschreitet und bei einem an dem zweiten elektrischen Steueranschluss 80 anstehenden Signal, welches einen fehlerfreien oder funktionstüchtigen Betrieb des elektronischen Steuergeräts 14 repräsentiert, die elektromagnetische Ventileinrichtung 8 bzw. das zweite 2/-2-Wege-Magnetventil 12 nicht in die Entlüftungsstellung schaltet. Beide Bedingungen, welche eine voll funktionsfähige elektrische Steuerung der Parkbremseinrichtung 1 symbolisieren, müssen daher kumulativ erfüllt sein, damit keine "Notentlüftung" der Federspeicherbremszylinder erfolgt. Denn in diesem Fall kann eine Entlüftung durch den Feststellbremssignalgeber 36 über das Steuergerät 14 wie üblich stattfinden. Die Erfüllung beider Bedingungen wird z.B. anhand eines "UND"-Gatters in der elektrischen Schalteinrichtung 76 abgebildet.

Falls jedoch eine der oben genannten Bedingungen nicht erfüllt ist und die am ersten Steueranschluss 78 abgegriffene Spannung der ersten elektrischen Energieversorgung 66 den vorbestimmten Grenzwert für die Spannung unterschreitet und/oder am zweiten Steueranschluss 80 ein Signal ansteht, welches einen Fehler oder eine Störung des elektronischen Steuergeräts 14 repräsentiert, dann wird die elektromagnetische Ventileinrichtung 8 und dort insbesondere das zweite 2/2-Wege-Magnetventil 12 bestromt und damit in die Entlüftungsstellung geschaltet. Denn in diesem Fall weisen entweder die erste elektrische Energieversorgung 66 und/oder das elektronische Steuergerät 14 einen Fehler auf, so dass eine Entlüftung der Federspeicherbremszylinder auf diesem Wege nicht mehr gewährleistet werden kann. In diesem Fall sorgt daher die Kombination aus zweiter elektrischer Energieversorgung 68 und elektrischer Schalteinrichtung 76 für eine Redundanz im Hinblick auf das Zuspannen der Federspeicherbremszylinder im Sinne eines "Notzuspannens".

Das elektronische Steuergerät 14 enthält bevorzugt Eigenüberwachungsroutinen, welche im Falle einer Funktionsuntüchtigkeit oder eines Fehlers ein Fehlersignal an den zweiten elektrischen Steueranschluss 80 der elektrischen Schalteinrichtung 76 aussteuern.

Anstatt zweier Steueranschlüsse 78, 80 könnte die elektrische Schalteinrichtung 76 auch nur einen einzigen Steueranschluss 78 oder 80 aufweisen, in welchen dann entweder der Spannung der ersten elektrischen Energieversorgung 66 eingeleitet und mit dem vorbestimmten Grenzwert für die Spannung wie oben beschrieben verglichen wird. Falls dann die gemessene Spannung der ersten elektrischen Energieversorgung 66 den Grenzwert unterschreitet, dann wird das zweite 2/2-Wege-Magnetventil 12 bestromt, um in seine Entlüftungsstellung zu schalten, andernfalls nicht. Oder der einzige Steueranschluss 78 oder 80 wird mit dem den Funktionszustand (funktionstüchtig/nicht funktionstüchtig bzw. Fehler) des elektronischen Steuergeräts 14 beaufschlagt. Falls dann ein einen Fehler des elektronischen Steuergeräts 14 repräsentierendes Signal an dem einzigen Steueranschluss 78 oder 80 ansteht, dann wird das zweite 2/2-Wege-Magnetventil 12 bestromt, um in seine Entlüftungsstellung zu schalten, andernfalls nicht.

Die elektrische Schalteinrichtung 76 verhält sich demzufolge als Öffner, d.h. solange das Signal an dem wenigstens einen elektrischen Steueranschluss 78, 80 signalisiert, dass kein Fehler im elektronischen Steuergerät 14 vorliegt bzw. die Energieversorgung durch die erste elektrische Energieversorgung 66 ausreichend ist, dann wird auch die elektromagnetische Ventileinrichtung 8 beispielsweise nicht bestromt und schaltet daher auch nicht in ihre Entlüftungsstellung.

Andernfalls, also wenn das Signal an dem wenigstens einen elektrischen Steueranschluss 78, 80 signalisiert, dass ein Fehler im elektronischen Steuergerät 14 vorliegt bzw. die Energieversorgung durch die erste elektrische Energieversorgung 66 nicht ausreichend ist, dann wird die elektromagnetische Ventileinrichtung 8 beispielsweise bestromt, um in ihre Entlüftungsstellung zu schalten.

Gemäß den erfindungsgemäßen Ausführungsformen von **Fig.3** bis **Fig.5** sind wenigstens die elektromagnetische Ventileinrichtung 8, das Relaisventil 18, die elektronische Steuereinrichtung 14, die elektrische Schalteinrichtung 76, der Vorratsanschluss 2, der Anschluss 40 für die Federspeicherbremszylinder, der Feststellbremssignalanschluss 32 sowie ein Anschluss 82 für den elektrischen Schalter 72 in oder an einem Gehäuse 86 einer Baueinheit 84 integriert, welche dann ein Parkbremsmodul bildet. Dies resultiert in einer kompakten Baueinheit 84, welche als Grundmodul weiter ausbaufähig ist.

Die elektrische Schalteinrichtung 76 kann aber auch außerhalb des Gehäuses 86 des Parkbremsmoduls bzw. der Baueinheit 84 angeordnet sein. Dann ist am Gehäuse 86 ein Anschluss für die elektrische Schalteinrichtung 76 vorhanden.

Auch bei den Ausführungsformen gemäß **Figuren 1** und **2** kann wenigstens die elektromagnetische Ventileinrichtung 8, das Relaisventil 18, die elektronische Steuereinrichtung 14, der Vorratsanschluss 2, der Anschluss 40 für die Federspeicherbremszylinder, der Feststellbremssignalanschluss 32 sowie der Anschluss 82 für den elektrischen Schalter 72 in oder an einem Gehäuse 86 einer Baueinheit84 integriert sein, welche dann das Parkbremsmodul bildet.

Bei allen Ausführungsformen kann die zweite elektrische Energieversorgung 68 anstatt wie in den Figuren 3 bis 5 gezeigt in der Fahrerkabine 74 auch in dem Gehäuse 86 der Baueinheit 84 angeordnet sein.

Bei der erfindungsgemäßen Ausführungsform von **Fig.3** schaltet der elektrische Schalter 72 lediglich einen Pluspol der zweiten elektrischen Energieversorgung 68.

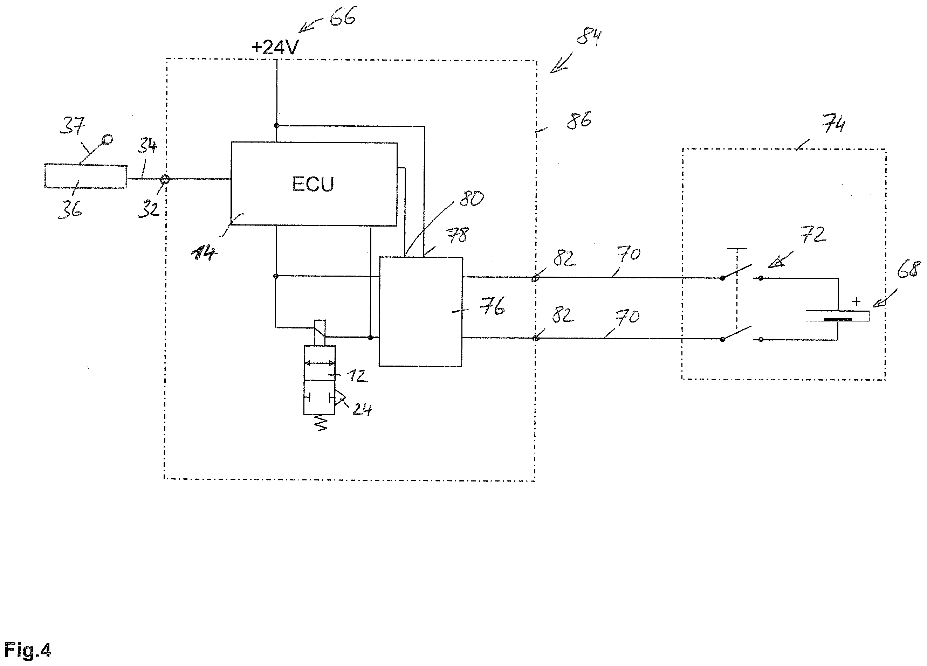

Im Unterschied zu der Ausführungsform von **Fig.3** schaltet der elektrische Schalter 72 bei der erfindungsgemäßen Ausführungsform von **Fig.4** den Pluspol und den Minuspol der zweiten elektrischen Energieversorgung 68.

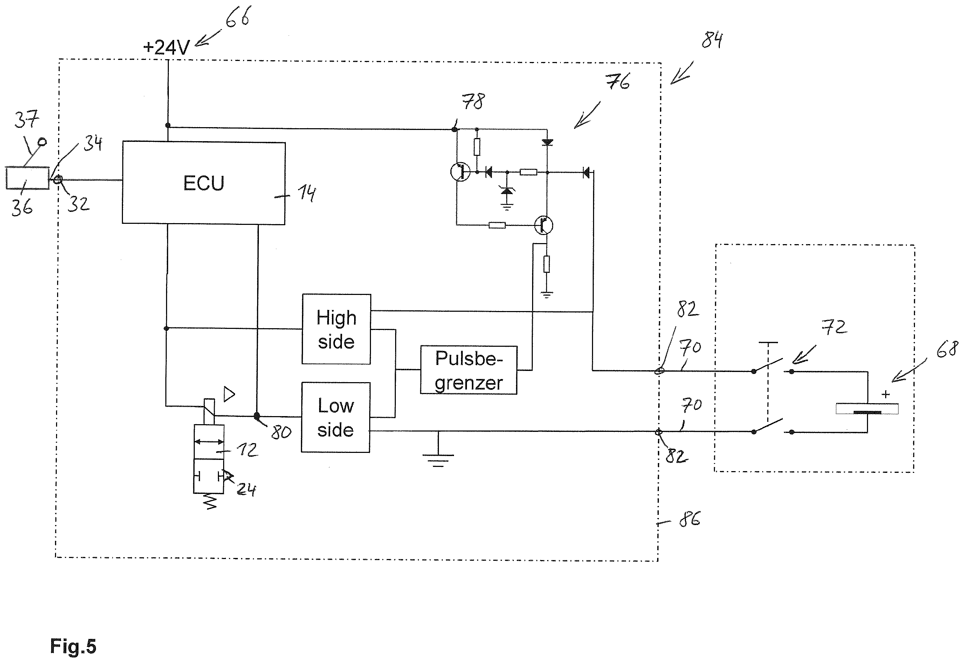

Bei der erfindungsgemäßen Ausführungsform von **Fig.5** ist ein Ausführungsbeispiel für eine elektrische Schalteinrichtung 76 konkretisiert dargestellt, welche eine Elektronik aufweist, die aber hier im Einzelnen nicht erläutert wird.

Generell kann das elektronische Steuergerät 14 die zweite elektrische Energieversorgung 68 auf deren Ladezustand überwachen und bei einem Unterschreiten eines vorgegebenen Grenzwerts für den Ladezustand ein Warnsignal erzeugen.

Die Parkbremseinrichtung kann neben den Grundfunktionen "Parken" und "Fahren" selbstverständlich weitere Funktionalitäten aufweisen, beispielsweise eine Trailer-Test-Funktion oder eine Hilfsbremsfunktion. Hierzu ist dann die Parkbremseinrichtung und insbesondere die elektromagnetische Ventileinrichtung 8 mit weiteren elektromagnetischen Ventilen ausgerüstet.

BEZUGSZEICHENLISTE

| | |
|---|---|
| 1 | Parkbremseinrichtung |
| 2 | Vorratsanschluss |
| 4 | Rückschlagventil |
| 6 | Vorratsleitung |
| 8 | Ventileinrichtung |
| 10 | erstes 2/2-Wegemagnetventil |
| 12 | zweites 2/2-Wegemagnetventil |
| 14 | Steuergerät |
| 16 | Vorratseingang |
| 18 | Relaisventil |
| 20 | Steuereingang |
| 22 | Steuerleitung |
| 24 | Drucksenke |
| 26 | Rückkopplungsleitung |
| 28 | Arbeitsausgang |
| 30 | Drosselelement |
| 32 | Feststellbremssignalanschluss |
| 34 | Signalleitung |
| 36 | Feststellbremssignalgeber |
| 37 | Feststellbremsbetätigungsorgan |
| 38 | Arbeitsleitung |
| 40 | Anschluss für Federspeicherbremszylinder |
| 42 | Steuerkammer |

| | |
|---|---|
| 44 | Gehäuse |
| 46 | Relaiskolben |
| 48 | Ventilkörper |
| 50 | Auslasssitz |
| 52 | Manschette |
| 54 | Einlasssitz |
| 56 | Entlüftung |
| 58 | Arbeitskammer |
| 60 | Vorratskammer |
| 62 | Manschettenfeder |
| 64 | Relaiskolbenfeder |
| 66 | erste Energieversorgung |
| 68 | zweite Energieversorgung |
| 70 | elektr. Leitung |
| 72 | elektr. Schalter |
| 74 | Fahrerkabine |
| 76 | elektr. Schalteinrichtung |
| 78 | erster Steueranschluss |
| 80 | zweiter Steueranschluss |
| 82 | Anschluss |
| 84 | Baueinheit |
| 86 | Gehäuse |

**Patentansprüche**

1. Elektrische Parkbremseinrichtung (1), umfassend

a) ein elektronisches Steuergerät (14),

b) eine vom elektronischen Steuergerät (14) gesteuerte elektromagnetische Ventileinrichtung (8) mit einer Entlüftungsstellung,

c) wenigstens einen passiven Federspeicherbremszylinder, welcher belüftet die Parkbremse löst und entlüftet zuspannt,

d) ein Relaisventil (18) mit einem pneumatischen Steuereingang (20), welcher mit der elektromagnetischen Ventileinrichtung (8) in Verbindung steht, welche in der Entlüftungsstellung den pneumatischen Steuereingang (20) des Relaisventils (18) entlüftet, wodurch ein mit dem wenigstens einen Federspeicherbremszylinder in Verbindung stehender Arbeitsausgang (28) des Relaisventils (18) entlüftet wird,

e) eine erste elektrische Energieversorgung (66), welche das elektronische Steuergerät (14) zur Betätigung der elektromagnetischen Ventileinrichtung (8) mit elektrischer Energie versorgt,

f) eine elektrische Betätigungseinrichtung (36), welche zumindest die Zustände "Parken" und Fahren" repräsentierende Steuersignale in das elektronische Steuergerät (14) einsteuert, wobei

g) eine zweite, von der ersten elektrischen Energieversorgung (66) unabhängige elektrische Energieversorgung (68) vorgesehen ist, **dadurch gekennzeichnet, dass**

h) durch die zweite elektrische Energieversorgung (68) eine vom elektronischen Steuergerät (14) unabhängige elektrische Schalteinrichtung (76) mit elektrischer Energie versorgbar ist, und dass

i) wenigstens ein elektrischer Schalter (72) vorgesehen ist, welcher in einer Schaltstellung die elektrische Schalteinrichtung (76) mit der zweiten elektrischen Energieversorgung (68) verbindet, wobei

j) die elektrische Schalteinrichtung (76) so ausgebildet ist, dass sie bedingt durch das Verbinden mit der zweiten elektrischen Energieversorgung (68) die elektromagnetische Ventileinrichtung (8) in die Entlüftungsstellung schaltet.

2. Parkbremseinrichtung nach Anspruch 1, **dadurch gekennzeichnet, dass** die zweite elektrische Energieversorgung (68) wenigstens Folgendes beinhaltet: Eine Batterie, einen Akku mit Ladeschaltung, einen Doppelschichtkondensator, eine Kombination von Batterie oder Akku und Kondensator.

3. Parkbremseinrichtung nach einem der vorhergehenden Ansprüche, **dadurch gekennzeichnet, dass** der elektrische Schalter (72) ein elektro-mechanischer Schalter oder ein kontaktloser Schalter ist.

4. Parkbremseinrichtung nach einem der vorhergehenden Ansprüche, **dadurch gekennzeichnet, dass** der elektrische Schalter (72) lediglich einen Pluspol der zweiten elektrischen Energieversorgung (68) oder den Pluspol und den Minuspol der zweiten elektrischen Energieversorgung (68) schaltet.

5. Parkbremseinrichtung nach einem der vorhergehenden Ansprüche, **dadurch gekennzeichnet, dass** der elektrische Schalter (72) derart an oder in der elektrische Betätigungseinrichtung (36) integriert ist, dass er bei einer Betätigung eines manuell betätigbaren Betätigungsorgans (37) der Betätigungseinrichtung (36) in eine den Zustand "Parken" repräsentierende Stellung die zweite elektrische Energieversorgung (68) mit der elektrischen Schalteinrichtung (76) verbindet.

6. Parkbremseinrichtung nach einem der vorhergehenden Ansprüche, **dadurch gekennzeichnet, dass** die elektrische Schalteinrichtung (76) wenigstens einen mit der ersten elektrischen Energieversorgung (66) und/oder mit dem elektronischen Steuergerät (14) verbundenen elektrischen Steueranschluss (78, 80) aufweist und derart ausgebildet ist, dass sie

   a) bei einem an dem wenigstens einen elektrischen Steueranschluss (78, 80) anstehenden Signal, welches einen vorbestimmten Grenzwert für Strom und/oder Spannung überschreitenden Wert für Strom und/oder Spannung und/oder einen fehlerfreien Betrieb des elektronischen Steuergeräts (14) repräsentiert, die elektromagnetische Ventileinrichtung (8) nicht in die Entlüftungsstellung schaltet, jedoch

   b) bei einem an dem wenigstens einen elektrischen Steueranschluss (78, 80) anstehenden Signal, welches einen den vorbestimmten Grenzwert für Strom und/oder Spannung unterschreitenden Wert für Strom und/oder Spannung und/oder einen Fehler oder eine Störung des elektronischen Steuergeräts (14) repräsentiert, die elektromagnetische Ventileinrichtung (8) in die Entlüftungsstellung schaltet.

7. Parkbremseinrichtung nach einem der vorhergehenden Ansprüche, **dadurch gekennzeichnet, dass** die elektrische Schalteinrichtung (76) wenigstens Folgendes beinhaltet: Ein Relais, eine elektronische Schaltung, eine Schutzbeschaltung zur Verhinderung einer falschen Bestromung der elektromagnetischen Ventileinrichtung.

8. Parkbremseinrichtung nach einem der vorhergehenden Ansprüche, **dadurch gekennzeichnet, dass** das elektronische Steuergerät (14) die zweite elektrische Energieversorgung (68) auf deren Ladezustand überwacht und bei einem Unterschreiten eines vorgegebenen Grenzwerts für den Ladezustand ein Warnsignal erzeugt.

9. Parkbremseinrichtung nach einem der vorhergehenden Ansprüche, **dadurch gekennzeichnet, dass** sie ein Parkbremsmodul als Baueinheit (84) beinhaltet, bei welchem in oder an einem Gehäuse (86) wenigstens Folgendes integriert ist: Die elektronische Steuereinrichtung (14), die elektromagnetische Ventileinrichtung (8), ein Feststellbremssignalanschluss (32) für die elektrische Betätigungseinrichtung (36), ein Anschluss (40) für den wenigstens einen Federspeicherbremszylinder, ein Vorratsanschluss (2), ein Anschluss (82) für den elektrischen Schalter (72) .

10. Parkbremseinrichtung nach Anspruch 9, **dadurch gekennzeichnet, dass** in dem Gehäuse (86) auch die zweite elektrische Energieversorgung (68) und/oder die elektrische Schalteinrichtung (76) angeordnet sind, oder dass das Gehäuse (86) einen Anschluss für die zweite elektrische Energieversorgung (68) und/oder einen Anschluss für die elektrische Schalteinrichtung (76) aufweist.

11. Parkbremseinrichtung nach einem der vorhergehenden Ansprüche, **dadurch gekennzeichnet, dass** die elektromagnetische Ventileinrichtung (8) ein 2/2-Wege-Magnetventil (12) als Auslassventil beinhaltet, welches bestromt in seine Entlüftungsstellung schaltet, in welcher der wenigstens eine Federspeicherbremszylinder mit einer Drucksenke (24) verbunden wird, und entstromt federbelastet in seine Sperrstellung schaltet.

12. Fahrzeug mit einer Parkbremseinrichtung (1) nach einem der vorhergehenden Ansprüche, wobei der wenigstens eine elektrische Schalter (72) in einer Fahrerkabine (74) des Fahrzeugs angeordnet ist.

13. Fahrzeug nach Anspruch 12, **dadurch gekennzeichnet, dass** es ein Zugfahrzeug für eine Zugfahrzeug-Anhängerkombination ist.

**Claims**

1. Electric parking brake device (1), comprising:

a) an electronic control unit (14),

b) an electromagnetic valve device (8) controlled by the said electronic control unit (14), the said valve device having a venting position,

c) at least one passive spring-actuated brake cylinder, which releases the parking brake when aerated and applies it when vented,

d) a relay valve (18) with a pneumatic control inlet (20), which is connected to the electromagnetic valve device (8), which in the venting position vents the pneumatic control inlet (20) of the relay valve (18), whereby a working outlet (28) of the relay valve (18) which is connected to the at least one spring-actuated brake cylinder is vented,

e) a first electrical energy supply (66) which supplies the electronic control unit (14) with electrical energy for actuating the electromagnetic valve device (8),

f) an electrical actuating device (36) which emits to the electronic control unit (14) control signals that represent at least the conditions "Park" and "Drive",

wherein

g) a second electrical energy supply (68) independent of the first electrical energy supply (66) is provided,

**characterised in that**

h) by means of the said second electrical energy supply an electric switching device (76) independent of the electronic control unit (14) can be supplied with electrical energy, and

i) at least one electric switch (72) is provided, which in one switch position connects the electric switching device (76) to the second electrical energy supply (68), wherein

j) the electric switching device (76) is designed such that by virtue of the connection to the second electrical energy supply (68), it switches the electromagnetic valve device (8) to the venting position.

2. Parking brake device according to Claim 1, **characterised in that** the second electrical energy supply (68) comprises at least the following:

a battery, an accumulator with a charging circuit, a double-layer condenser, a combination of the battery or accumulator and the condenser.

3. Parking brake device according to either of the preceding claims, **characterised in that** the electric switch (72) is an electro-mechanical switch or a contactless switch.

4. Parking brake device according to any of the preceding claims, **characterised in that** the electric switch (72) only connects a positive pole of the second electrical energy supply (68) or the positive pole and the negative pole of the second electrical energy supply (68).

5. Parking brake device according to any of the preceding claims, **characterised in that** the electric switch (72) is integrated in or on the electric actuation device (36) in such manner that when an actuation element (37) of the actuation device (36) that can be actuated manually is actuated, in a position that represents the "Park" condition the said switch connects the second electrical energy supply (68) to the electric switching device (76).

6. Parking brake device according to any of the preceding claims, **characterised in that** the electric switching device (76) comprises at least one electric control connection (78, 80) which is connected to the first electrical energy supply (66) and/or to the electronic control unit (14), and is designed such that

a) when a signal is applied at the at least one electric control connection (78, 80), which signal represents a value of the current and/or voltage that exceeds a predetermined limit of the current and/or voltage and/or represents a defect-free operation of the electronic control unit (14), the electromagnetic valve device (8) does not move to the venting position, but

b) when a signal is applied at the at least one electric control connection (78, 80), which signal represents a value of the current and/or voltage that is less than the said predetermined limit of the current and/or voltage and/or a defect or disorder of the electronic control unit (14), the electromagnetic valve device (8) moves to the venting position.

7. Parking brake device according to any of the preceding claims, **characterised in that** the electric switching device (76) contains at least the following: a relay, an electronic circuit, and a protective circuit to prevent the erroneous energising of the electromagnetic valve device.

8. Parking brake device according to any of the preceding claims, **characterised in that** the electronic control unit (14) monitors the charge condition of the second electrical energy supply (68), and if the charge condition falls below a predetermined limit value, emits a warning signal.

9. Parking brake device according to any of the preceding claims, **characterised in that** it comprises a parking brake module as a structural unit (84), in which, in or on a housing (86), at least the following are integrated: the electronic control unit (14), the electromagnetic valve device (8), a holding brake signal connection (32) for the electric actuation device (36), a connection for the at least one spring-actuated brake cylinder, a reservoir connection (2), and a connection (82) for the electric switch (72).

10. Parking brake device according to Claim 9, **characterised in that** in the housing (86) are also arranged the second electrical energy supply (68) and/or the electric switching device (76), or the housing (86) has a connection for the second electrical energy supply (68) and/or a connection for the electric switching device (76).

11. Parking brake device according to any of the preceding claims, **characterised in that** the electromagnetic valve device (8) has a 2/2-way magnetic valve (12) as the outlet valve, which moves to its venting position when energised, in which position the at least one spring-actuated brake cylinder is connected to a pressure sink (24) and, when not energised, moves under spring action to its blocking position.

12. Vehicle with a parking brake device (1) according to any of the preceding claims, wherein the at least one electric switch (72) is arranged in a driver's cabin (74) of the vehicle.

13. Vehicle according to Claim 12, **characterised in that** it is a tractor vehicle for a tractor-trailer combination.

**Revendications**

1. Dispositif (1) électrique de frein de stationnement comprenant

   a) un appareil (14) électronique de commande,
   b) un dispositif (8) de vanne électromagnétique commandée par l'appareil (14) électronique de commande et ayant une position de purge,
   c) au moins un cylindre passif de frein à ressort accumulateur, qui, alimenté en air, desserre le frein de stationnement et, purgé, le serre,
   d) une vanne (18) relais ayant une entrée (20) pneumatiques de commande, qui est en liaison avec le dispositif (8) de vanne électromagnétique, lequel dans la position de purge purge l'entrée (20) pneumatique de commande de la vanne (18) relais, grâce à quoi une sortie (28) de travail, en liaison avec le au moins un cylindre de frein à ressort accumulateur, de la vanne (18) relais est purgée,
   e) une première alimentation (66) en énergie électrique, qui alimente en énergie électrique l'appareil (14) électronique de commande pour l'actionnement du dispositif (8) de vanne électromagnétique,
   f) un dispositif (36) électrique d'actionnement, qui entre dans l'appareil (14) électronique de commande des signaux de commande représentant au moins les états "stationnement" et "marche",
   dans lequel
   g) il est prévu une deuxième alimentation (68) en énergie électrique indépendante de la première alimentation (66) en énergie électrique,
   **caractérisé en ce que**
   h) par la deuxième alimentation (68) en énergie électrique, un dispositif (76) électrique de commutation indépendant de l'appareil (14) électronique de commande peut être alimenté en énergie électrique, et **en ce que**
   i) il est prévu au moins un interrupteur (72) électrique, qui dans une position de commutation relie le premier dispositif (76) électrique de commutation à la deuxième alimentation (68) en énergie électrique, dans lequel
   j) le dispositif (76) électrique de commutation est constitué de manière à mettre, en raison de la liaison avec la deuxième alimentation (68) en énergie électrique, le dispositif (8) de vanne électromagnétique dans la position de purge.

2. Dispositif de frein de stationnement suivant la revendication 1, **caractérisé en ce que** la deuxième alimentation (68) en énergie électrique comporte au moins ce qui suit : une batterie, un accumulateur avec circuit de charge, un condensateur à double couche, une combinaison d'une batterie ou d'un accumulateur et d'un condensateur.

3. Dispositif de frein de stationnement suivant l'une des revendications précédentes, **caractérisé en ce que** l'interrupteur (72) électrique est un interrupteur électromécanique ou un interrupteur sans contact.

**4.** Dispositif de frein de stationnement suivant l'une des revendications précédentes, **caractérisé en ce que** l'interrupteur (72) électrique commute simplement un pôle plus de la deuxième alimentation (68) d'énergie électrique ou le pôle plus et le pôle moins de la deuxième alimentation (68) en énergie électrique.

**5.** Dispositif de frein de stationnement suivant l'une des revendications précédentes, **caractérisé en ce que** l'interrupteur (72) électrique est intégré a ou sur le dispositif (36) électrique d'actionnement de manière à ce que, lors d'un actionnement d'un organe (37) d'actionnement pouvant être actionné manuellement du dispositif (36) d'actionnement dans une position représentant l'état "stationnement", la deuxième alimentation (68) en énergie électrique est en liaison avec le dispositif (76) de commutation électrique.

**6.** Dispositif de frein de stationnement suivant l'une des revendications précédentes, **caractérisé en ce que** le dispositif (76) électrique de commutation a au moins une borne (78, 80) électrique de commande reliée à la première alimentation (66) en énergie électrique et/ou à l'appareil (14) électronique de commande et est constitué de manière à ce que,

a) lors d'un signal appliqué à la au moins une borne (78, 80) électrique de commande, qui représente une valeur du courant et/ou de la tension dépassant une valeur limite définie à l'avance du courant et/ou de la tension et/ou un fonctionnement sans défaut de l'appareil (14) électronique de commande, il ne mette pas le dispositif (8) de vanne électromagnétique dans la position de purge, tandis que

b) pour un signal appliqué à la au moins une borne (78, 80) électrique de commande, qui représente une valeur du courant et/ou de la tension inférieure à la valeur limite définie à l'avance du courant et/ou de la tension et/ou un défaut ou une perturbation de l'appareil (14) électronique de commande, il mette le dispositif (8) de vanne électromagnétique dans la position de purge.

**7.** Dispositif de frein de stationnement suivant l'une des revendications précédentes, **caractérisé en ce que** le dispositif (76) électrique de commutation comporte au moins ce qui suit : un relais, un circuit électronique, un circuit de protection pour empêcher une mauvaise alimentation du dispositif de vanne électromagnétique.

**8.** Dispositif de frein de stationnement suivant l'une des revendications précédentes, **caractérisé en ce que** l'appareil (14) électronique de commande contrôle l'état de charge de la deuxième alimentation (68) en énergie électrique et, si l'on passe en dessous d'une valeur limite donnée à l'avance de l'état de charge, produit un signal d'alerte.

**9.** Dispositif de frein de stationnement suivant l'une des revendications précédentes, **caractérisé en ce qu'**il comporte un module de frein de stationnement sous la forme d'une unité (84) de construction, dans lequel dans ou sur un boîtier (86) est intégré au moins ce qui suit : le dispositif (14) électronique de commande, le dispositif (8) de vanne électromagnétique, une borne (32) de signal de frein de stationnement, du dispositif (36) électrique d'actionnement, une borne (40) du au moins un cylindre de frein à ressort accumulateur, une borne (2) de réserve, une borne (82), de l'interrupteur (72) électrique.

**10.** Dispositif de frein de stationnement suivant la revendication 9, **caractérisé en ce que** dans le boîtier (86) sont disposées aussi les deux alimentations (68) en énergie électrique et/ou le dispositif (76) électrique de commutation, ou **en ce que** le boîtier (86) a une borne pour la deuxième alimentation (68) en énergie électrique et/ou une borne pour le dispositif (76) électrique de commutation.

**11.** Dispositif de frein de stationnement suivant l'une des revendications précédentes, **caractérisé en ce que** le dispositif (8) de vanne électromagnétique comporte une électrovanne (12) à 2/2 voies comme vanne de sortie qui, alimentée en courant, prend sa position de purge dans laquelle le au moins un cylindre de frein à ressort accumulateur est relié à un puit (24) de pression et, non alimentée en courant, prend, sous l'action d'un ressort, sa position de blocage.

**12.** Véhicule ayant un dispositif (1) de frein de stationnement suivant l'une des revendications précédentes, dans lequel le au moins un interrupteur (72) électrique est disposé dans une cabine (74) de conducteur du véhicule.

**13.** Véhicule suivant la revendication 12, **caractérisé en ce que** c'est un véhicule de traction pour une combinaison d'un véhicule de traction et d'une remorque.

Fig. 1

Fig. 2

Fig.3

EP 3 341 253 B1

Fig.4

EP 3 341 253 B1

High side

Low side

Pulsbe-grenzer

ECU

+24V

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1504975 B2